# EUROPEAN PATENT APPLICATION

(11) **EP 4 663 512 A1**
(43) Date of publication of application: **17.12.2025**
(21) Application number: 23920297.1
(22) Date of filing: 07.02.2023
(51) Int. Cl.: B62D 5/04, H02K 5/00, H02K 5/10

(54) **VEHICLE STEERING DEVICE**

(71) Applicant: JTEKT Corporation, Kariya-shi, Aichi 448-8652 (JP)
(72) Inventor: SATO Yuto, Kariya-shi, Aichi 448-8652 (JP); FUKUNAGA Kenichi, Kariya-shi, Aichi 448-8652 (JP); KOUNO Taichi, Kariya-shi, Aichi 448-8652 (JP); SAJI Nobuyasu, Kariya-shi, Aichi 448-8652 (JP); TANIKAWA Takaya, Kariya-shi, Aichi 448-8652 (JP); TSUKAHARA Kosuke, Kariya-shi, Aichi 448-8652 (JP); NATSUME Yusuke, Kariya-shi, Aichi 448-8652 (JP); SEI Kota, Kariya-shi, Aichi 448-8652 (JP)
(74) Representative: Winter, Brandl - Partnerschaft mbB
(86) International application number: PCT/JP2023/004013
(87) International publication number: WO 2024/166208

(57) **Abstract**

A vehicle steering system (10) includes a motor (30) and a transmission mechanism (40). The motor (30) includes a motor housing (31). The transmission mechanism (40) includes a mechanism housing (40). The motor (30) is disposed such that an output portion (34a) of an output shaft (34) protrudes from the lower side of the motor housing (31) in a direction of gravity. The transmission mechanism (40) is disposed so as to house the output portion (34a) from the lower side of the motor (30) in the direction of gravity. A motor-side fitting portion (31d) of the motor housing (31) includes an extending portion (72) disposed outward of a mechanism-side fitting portion (41d) of the mechanism housing (41) in the radial direction of the output shaft (34). The extending portion (72) extends from the motor housing (31) toward the lower side in the direction of gravity such that the position of the extending portion (72) in the axial direction overlaps with the mechanism-side fitting portion (41d).

## Description

### TECHNICAL FIELD

The present disclosure relates to vehicle steering systems.

### BACKGROUND ART

As disclosed in, for example, Patent Document 1, there is a vehicle steering system configured to apply an assist force to a column shaft by the torque of a motor. The motor is connected to the column shaft via a reduction mechanism. The reduction mechanism is fastened to the motor in order to transmit the motor's torque to the column shaft. When the motor and the reduction mechanism are fastened together, there is a concern that water may enter the interior of the reduction mechanism through a clearance between the fastening portions of the motor and the reduction mechanism. In this regard, for example, Patent Document 2 discloses a configuration in which an O-ring is provided between a motor and an external device to reduce entry of water into the interior of the external device through a clearance between the fastening portions of the motor and the external device.

### Related Art Documents

### Patent Documents

Patent Document 1: Japanese Unexamined Patent Application Publication No. 2012-90496 (JP 2012-90496 A)
Patent Document 2: WO 2018/180923

### SUMMARY OF THE INVENTION

### Problem to be Solved by the Invention

In a vehicle steering system such as that disclosed in Patent Document 1, entry of water into the interior of a reduction mechanism through a clearance between the fastening portions of a motor and the reduction mechanism can be reduced by providing an O-ring between the fastening portions as in Patent Document 2. In other words, an additional configuration such as provision of an O-ring needs to be added in order to reduce the entry of water into the interior of the reduction mechanism.

### Means for Solving the Problem

A vehicle steering system according to one aspect of the present disclosure includes an operating mechanism to which an operating member of a vehicle, namely a member configured to be operated to turn a steered wheel of the vehicle, is connected. The vehicle steering system includes: a motor configured to generate torque for changing an operating force that is needed to operate the operating member; and a transmission mechanism configured to transmit the torque generated by the motor to the operating mechanism. The motor includes a motor housing that houses a stator and a rotor. An output shaft configured to rotate with the rotor includes an output portion that protrudes from the motor housing to the outside. The transmission mechanism includes a mechanism housing that houses part of the operating mechanism and that houses the output portion so as to connect the part of the operating mechanism to the output shaft. The motor is disposed such that the axis of the output shaft intersects with a horizontal direction and that the output portion protrudes from the lower side of the motor housing in a direction of gravity. The transmission mechanism is disposed so as to house the output portion from the lower side of the motor in the direction of gravity. The motor housing includes a motor-side fitting portion that is fitted in the mechanism housing in an axial direction of the output shaft. The mechanism housing includes a mechanism-side fitting portion that is fitted on the motor-side fitting portion in the axial direction. The motor-side fitting portion includes an extending portion disposed outward of the mechanism-side fitting portion in a radial direction of the output shaft when viewed from the axial direction. The extending portion extends from the motor housing toward the lower side in the direction of gravity such that the position of the extending portion in the axial direction overlaps with the mechanism-side fitting portion.

### BRIEF DESCRIPTION OF THE DRAWINGS

[FIG. 1] FIG. 1 is a diagram showing a schematic configuration of a vehicle steering system according to an embodiment.
[FIG. 2] FIG. 2 is a diagram showing a schematic configuration of a motor and a transmission mechanism in FIG. 1.
[FIG. 3] FIG. 3 is a sectional view showing the configuration of the motor and the transmission mechanism in FIG. 1.
[FIG. 4] FIG. 4 is a perspective view showing the configuration of a motor housing in FIG. 3.
[FIG. 5] FIG. 5 is a plan view showing the configuration of the motor housing in FIG. 3.
[FIG. 6] FIG. 6 is a perspective view showing the configuration of a worm housing in FIG. 3.
[FIG. 7] FIG. 7 is a schematic diagram of the structure of a bolt fastening portion in FIG. 3, that is, a portion including a bolt fastening surface.
[FIG. 8] FIG. 8 is a schematic diagram of the configuration of a portion including a normal end face in FIG. 3.
[FIG. 9] FIG. 9 is a schematic diagram of the configuration of a portion including an end face of a connecting portion in FIG. 3.

### MODES FOR CARRYING OUT THE INVENTION

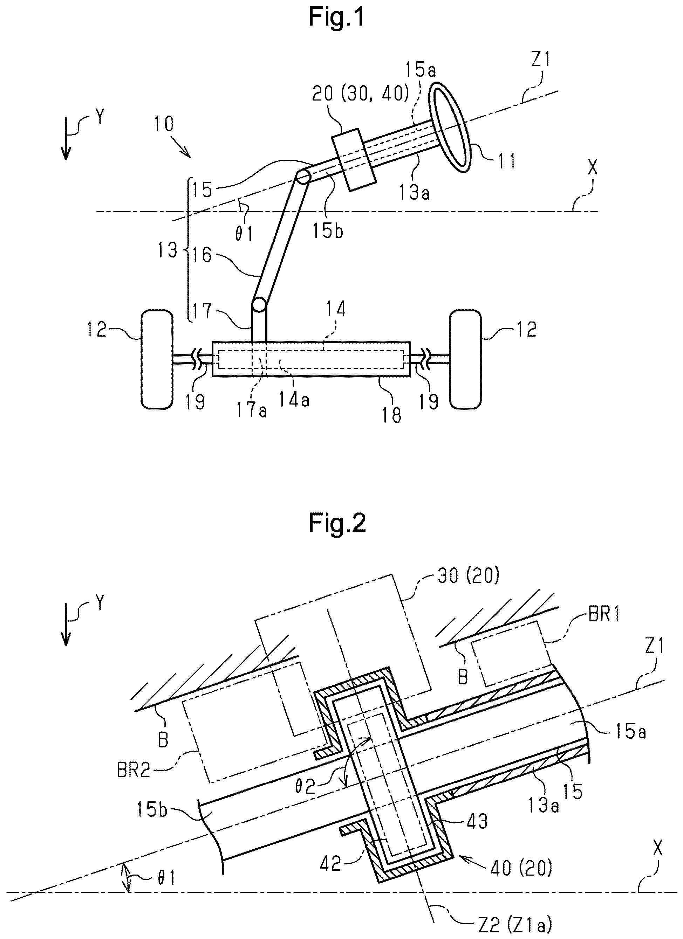

A vehicle steering system according to an embodiment will be described with reference to the drawings. As shown in FIG. 1, an electric power steering system 10 is an example of a vehicle steering system that is mounted on a vehicle. The electric power steering system 10 includes an operating mechanism 13 and a steered shaft 14. The operating mechanism 13 and the steered shaft 14 form a power transmission path between an operating member 11 of the vehicle and steered wheels 12, 12 of the vehicle. The operating member 11 is, for example, a steering wheel. The operating mechanism 13 includes a column shaft 15, an intermediate shaft 16, and a pinion shaft 17 that are connected to each other. The column shaft 15 is rotatably supported inside a steering column 13a that is fixed to a vehicle body. The column shaft 15 connects the operating member 11 and the intermediate shaft 16. The intermediate shaft 16 connects the column shaft 15 and the pinion shaft 17. The steered shaft 14 extends along the left-right direction in FIG. 1 that is the width direction of the vehicle body. The steered shaft 14 is housed inside a housing 18 that is fixed to the vehicle body. The steered wheels 12, 12 are connected to both ends of the steered shaft 14 via tie rods 19, 19, respectively.

Pinion teeth 17a of the pinion shaft 17 mesh with rack teeth 14a of the steered shaft 14. Accordingly, the steered shaft 14 is moved along its axis in conjunction with an operation of rotating the operating member 11. As a result, the steered angle of the steered wheels 12, 12 is changed.

### <Regarding Operating Mechanism>

As shown in FIGS. 1 and 2, the operating mechanism 13 includes an assist mechanism 20. The assist mechanism 20 is a configuration for applying an assist force to the steered shaft 14. The assist force is a driving force that is applied to the operating member 11 in order to change an operating force needed to operate the operating member 11. The assist mechanism 20 includes a motor 30 and a transmission mechanism 40. The motor 30 is fixed to the outside of the transmission mechanism 40.

The steering column 13a is fixed to a vehicle body B via a fixing member BR1 such as a bracket. The transmission mechanism 40 is fixed to the vehicle body B via a fixing member BR2 such as a bracket. In other words, the motor 30 is fixed to the vehicle body B via the steering column 13a and the transmission mechanism 40.

### <Regarding Motor>

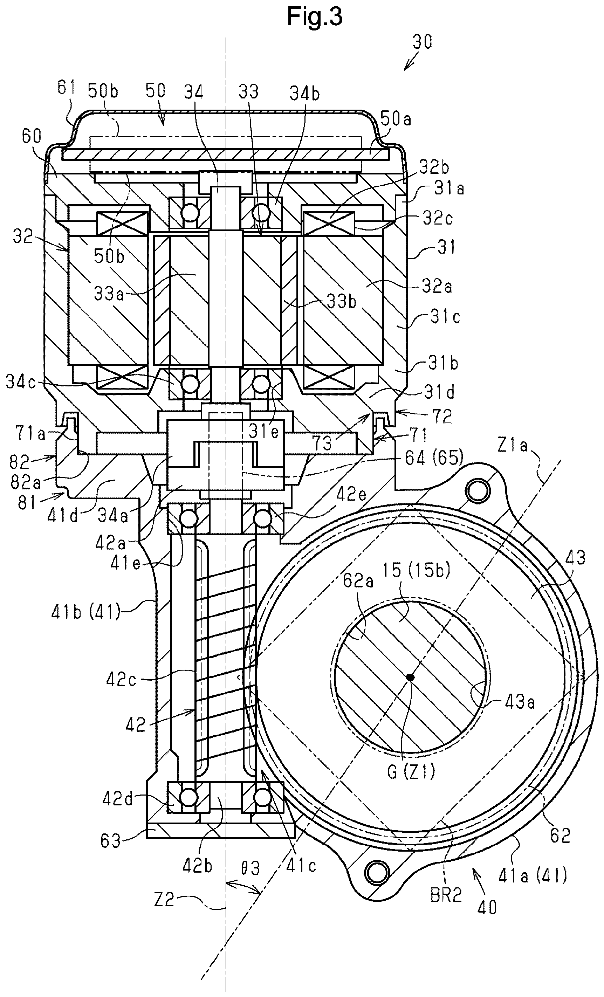

As shown in FIG. 3, the motor 30 is a source of the assist force. The motor 30 is, for example, a three-phase brushless motor. The motor 30 includes a motor housing 31, a stator 32, a rotor 33, an output shaft 34, and a control device 50. The motor housing 31 houses the stator 32 and the rotor 33. An output portion 34a, namely a first end of the output shaft 34 that rotates with the rotor 33, protrudes to the outside of the motor housing 31.

The control device 50 is provided integrally with the motor 30. The control device 50 acquires detection results from various sensors mounted on the vehicle as information indicating the driver's request or the traveling state, and controls the motor 30 according to the acquired information. The sensors are, for example, a torque sensor, a vehicle speed sensor, and a rotation angle sensor. The torque sensor is provided on an intermediate portion of the column shaft 15. The torque sensor detects the operating torque applied to the column shaft 15. The vehicle speed sensor detects the vehicle speed. The rotation angle sensor is provided on the motor 30. The rotation angle sensor detects the rotation angle of the output shaft 34. The control device 50 performs assist control to generate an assist force according to the operating torque and the vehicle speed through power supply control on the motor 30. The control device 50 performs vector control on the motor 30 using the rotation angle of the output shaft 34 detected by the rotation angle sensor.

### <Regarding Transmission Mechanism>

As shown in FIG. 3, the transmission mechanism 40 reduces the rotational speed of the motor 30 and transmits the resultant rotation to the column shaft 15. The transmission mechanism 40 is, for example, a worm reduction mechanism. More specifically, the transmission mechanism 40 includes a worm housing 41, a worm shaft 42, and a worm wheel 43. The worm housing 41 houses part of the column shaft 15 and also houses the worm shaft 42 and the worm wheel 43. In the present embodiment, the worm housing 41 is an example of a mechanism housing.

A joint 42a that is a first end of the worm shaft 42 is connected to the output shaft 34, i.e., the motor 30, via the output portion 34a. The worm shaft 42 includes a worm portion 42c between the joint 42a and a shaft end 42b that is a second end opposite from the joint 42a. The worm wheel 43 meshes with the worm shaft 42 via the worm portion 42c. The worm wheel 43 has a through hole 43a that passes through its central axis. The column shaft 15 is inserted through the through hole 43a and connected to the worm wheel 43 so as to be rotatable with the worm wheel 43. A first end 15a of the column shaft 15 is connected to the operating member 11. The column shaft 15 is connected to the worm wheel 43, i.e., the transmission mechanism 40, at a position between the first end 15a and a second end 15b that is opposite from the first end 15a. In other words, the transmission mechanism 40 connects the column shaft 15 and the output shaft 34 via the worm shaft 42 and the worm wheel 43.

### <Regarding Arrangement of Motor and Transmission Mechanism>

In FIGS. 1 to 3, a horizontal line X extending in a horizontal direction is shown, and the direction of gravity is shown by an arrow Y. The axis Z1 of the column shaft 15 forms an angle θ1 with the horizontal line X. The angle θ1 is, for example, an acute angle. In other words, the axis Z1 intersects with the horizontal line X such that the first end 15a is positioned on the upper side in the direction of gravity and the second end 15b is positioned on the lower side in the direction of gravity. The axis of the worm wheel 43 coincides with the axis Z1. In this case, the axis Z2 of the worm shaft 42 forms an angle θ2 with the axis Z1. The angle θ2 is, for example, a right angle. In other words, the axis Z2 intersects with the horizontal line X and the axis Z1 such that the joint 42a is positioned on the upper side in the direction of gravity and the shaft end 42b is positioned on the lower side in the direction of gravity. The axis Z2 passes through the center of gravity G of the worm wheel 43 and forms an angle θ3 with a center-of-gravity line Z1a that is perpendicular to the axis Z1. The angle θ3 is, for example, an acute angle. In other words, the position of the transmission mechanism 40 in the circumferential direction about the axis Z1 is adjusted such that the axis Z2 forms the angle θ3 with the center-of-gravity line Z1a.

As a result, the motor 30 is disposed in an attitude in which the axis Z2 of the output shaft 34 intersects with the horizontal line X and the output portion 34a protrudes from the lower side of the motor housing 31 in the direction of gravity. The transmission mechanism 40 is disposed in an attitude in which it houses the output portion 34a from the lower side of the motor 30 in the direction of gravity.

### <Regarding Configurations of Motor and Transmission Mechanism>

As shown in FIG. 3, the motor housing 31 has a tubular shape and is open at a first end 31a on the upper side in the direction of gravity. The motor housing 31 is made of, for example, metal such as aluminum. The motor housing 31 includes a body 31c and a motor-side fitting portion 31d. The body 31c has, for example, a cylindrical shape. The motor-side fitting portion 31d is provided at a second end 31b of the body 31c and forms the bottom of the motor housing 31.

The stator 32 is fixed to the inner periphery of the body 31c. The stator 32 includes a stator core 32a and a coil 32b. The stator core 32a has, for example, a cylindrical shape. The stator core 32a has a plurality of teeth 32c protruding from its inner periphery. The coil 32b is wound around each of the plurality of teeth 32c.

The rotor 33 is provided on the inner peripheral side of the stator 32 with a radial clearance between the rotor 33 and the stator 32. The rotor 33 includes a rotor core 33a and magnets 33b. The rotor core 33a has a cylindrical shape. The rotor core 33a is fixed to the outer periphery of the output shaft 34 so as to be rotatable with the output shaft 34. The output shaft 34 is rotatably supported relative to the motor housing 31 via bearings 34b, 34c. The magnets 33b are arranged, for example, along the circumferential direction of the rotor core 33a. The magnets 33b are arranged such that their magnetic poles alternate between N-poles and S-poles in the circumferential direction of the rotor core 33a.

The bearing 34b is fixed to a lid 60 attached to the first end 31a of the body 31c. The lid 60 has a disc shape. The lid 60 is made of, for example, metal such as aluminum. The first end 31a of the body 31c and the lid 60 are fitted together in a socket-and-spigot manner. The first end 31a of the body 31c and the lid 60 are fastened together on the outside of the motor housing 31 using bolts etc. The opening at the first end 31a of the body 31c is thus closed by the lid 60. The lid 60 supports, at its radial center, a second end of the output shaft 34 that is opposite from the output portion 34a.

The bearing 34c is fixed to the motor-side fitting portion 31d of the body 31c. The motor-side fitting portion 31d has a shaft hole 31e at its radial center. The motor-side fitting portion 31d supports, at its radial center, a portion near the first end of the output shaft 34. The output portion 34a protrudes to the outside of the motor housing 31 through the shaft hole 31e of the motor-side fitting portion 31d.

The control device 50 is provided on the opposite side of the lid 60 from the body 31c. The control device 50 includes a board 50a and a plurality of electronic components 50b. The board 50a is fixed to the lid 60 such that a first surface of the board 50a in the thickness direction faces the lid 60. The plurality of electronic components 50b is mounted on both sides of the board 50a. The plurality of electronic components 50b includes the rotation angle sensor. The rotation angle sensor is disposed, for example, on the first surface of the board 50a so as to face the second end of the output shaft 34 in the axial direction. The control device 50 is covered by a cover 61 from the side opposite from the lid 60. The cover 61 is made of, for example, metal such as aluminum.

As shown in FIG. 3, the worm housing 41 has a shape in which the side surface of a tube that is open on the upper side in the direction of gravity along the axis Z1 and the side surface of a tube that is open on the upper side in the direction of gravity along the axis Z2 are connected to each other. The upper side in the direction of gravity along the axis Z1 is the front side of the sheet of FIG. 3 along the axis Z1. In other words, the lower side in the direction of gravity along the axis Z1 is the back side of the sheet of FIG. 3 along the axis Z1. The upper side in the direction of gravity along the axis Z2 is the upper side of FIG. 3 along the axis Z2. In other words, the lower side in the direction of gravity along the axis Z2 is the lower side of FIG. 3 along the axis Z2. The worm housing 41 is made of, for example, metal such as aluminum. The worm housing 41 includes a first body 41a and a second body 41b. The first body 41a has, for example, a cylindrical shape having an axial length along the axis Z1 and a diameter greater than the axial length. The diameter of the first body 41a is greater than the diameter of the worm wheel 43. The first body 41a houses the worm wheel 43, i.e., part of the column shaft 15. The second body 41b has, for example, a cylindrical shape having an axial length along the axis Z2 and a diameter smaller than the axial length. The axial length of the second body 41b is greater than the axial length of the worm shaft 42. The second body 41b houses the worm shaft 42, i.e., the output portion 34a. The interior of the first body 41a and the interior of the second body 41b communicate with each other via a communication portion 41c. The worm shaft 42 and the worm wheel 43 mesh with each other via the communication portion 41c.

The fixing member BR2 is provided on the lower side of the first body 41a in the direction of gravity. A body cover 62 is provided on the upper side of the first body 41a in the direction of gravity. The body cover 62 houses a portion of the column shaft 15 where the torque sensor is provided. The body cover 62 closes an opening on the upper side of the first body 41a in the direction of gravity. The body cover 62 has a shaft hole 62a at its radial center. The column shaft 15 enters the interior of the worm housing 41 through the shaft hole 62a of the body cover 62.

A body lid 63 is provided on the lower side of the second body 41b in the direction of gravity. The body lid 63 closes an opening on the lower side of the second body 41b in the direction of gravity. A mechanism-side fitting portion 41d is provided on the upper side of the second body 41b in the direction of gravity, i.e., on the side opposite from the body lid 63. When the motor 30 and the transmission mechanism 40 are connected, the mechanism-side fitting portion 41d is fitted on the motor-side fitting portion 31d in a socket-and-spigot manner. The motor-side fitting portion 31d and the mechanism-side fitting portion 41d are fitted to each other and are fastened together by a plurality of bolts 64 from the lower side in the direction of gravity along the axis Z2. The number of bolt fastening portions 65 formed by this fastening using the bolts 64 is, for example, two. The mechanism-side fitting portion 41d includes a portion that is connected to the first body 41a.

The worm shaft 42 is rotatably supported relative to the second body 41b via bearings 42d, 42e. The worm shaft 42 is inserted into the second body 41b from the upper side in the direction of gravity such that the shaft end 42b is positioned near the body lid 63.

The bearing 42d is fixed to the second body 41b at a position near the body lid 63. The bearing 42e is fixed to the mechanism-side fitting portion 41d of the second body 41b. The mechanism-side fitting portion 41d has a shaft hole 41e at its radial center. The mechanism-side fitting portion 41d supports, at its radial center, a portion near the joint 42a of the worm shaft 42. The joint 42a protrudes to the outside of the worm housing 41 through the shaft hole 41e of the mechanism-side fitting portion 41d.

### <Regarding Configuration of Motor-Side Fitting Portion>

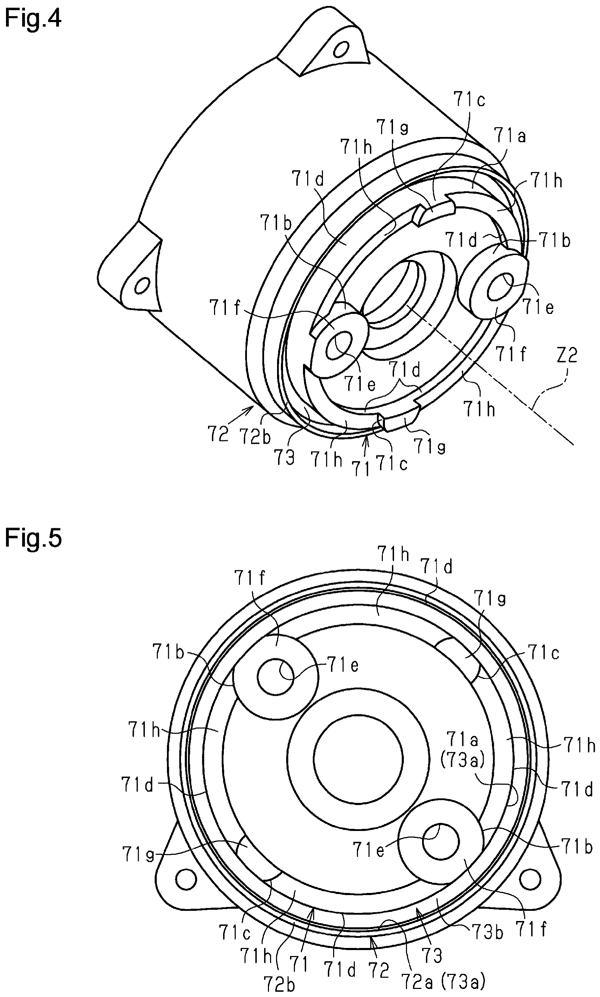

As shown in FIGS. 4 and 5, the motor-side fitting portion 31d of the motor housing 31 is a portion located at the second end 31b of the body 31c. The axial direction of the motor-side fitting portion 31d coincides with a direction along the axis Z2. **In** other words, the radial direction of the motor-side fitting portion 31d coincides with a direction perpendicular to the axis Z2. The motor-side fitting portion 31d includes a fitting protrusion 71, an extending portion 72, and a groove 73.

The fitting protrusion 71 extends in the axial direction from the second end 31b of the body 31c. The fitting protrusion 71 extends continuously along the circumferential direction of the body 31c. The fitting protrusion 71 is located radially inward of the outer peripheral edge of the body 31c. In the case of the motor 30 shown in FIG. 3, the fitting protrusion 71 is disposed radially outward of the rotor 33 when viewed from the axial direction. The fitting protrusion 71 is disposed so as to overlap with the stator 32 when viewed from the axial direction. An outer peripheral surface 71a of the fitting protrusion 71 is a cylindrical surface that extends perpendicular to the radial direction and parallel to the axial direction.

The fitting protrusion 71 is provided with two motor-side bolt fastening portions 71b and two fitting legs 71c. The motor-side bolt fastening portions 71b and the fitting legs 71c are portions of the fitting protrusion 71 that protrude more than the remaining part of the fitting protrusion 71 in the axial direction. The motor-side bolt fastening portions 71b and the fitting legs 71c are alternately arranged at equal intervals in the circumferential direction. In other words, the two motor-side bolt fastening portions 71b and the two fitting legs 71c are arranged at equal angular intervals of 90 degrees along the circumferential direction. The two motor-side bolt fastening portions 71b are arranged at equal angular intervals of 180 degrees along the circumferential direction. The two fitting legs 71c are arranged at equal angular intervals of 180 degrees along the circumferential direction. The fitting protrusions 71 have four connecting portions 71d each extending between a corresponding motor-side bolt fastening portion 71b and a corresponding fitting leg 71c that are adjacent to each other in the circumferential direction. The connecting portions 71d are portions that protrude less than the motor-side bolt fastening portions 71b and the fitting legs 71c in the axial direction. The motor-side bolt fastening portions 71b and the fitting legs 71c are discontinuously provided along the outer peripheral surface 71a.

The motor-side bolt fastening portions 71b have a cylindrical shape. In the radial direction of the fitting protrusion 71, the outermost positions of the motor-side bolt fastening portions 71b coincide with the outer peripheral surface 71a of the fitting protrusion 71. In the radial direction of the fitting protrusion 71, the innermost positions of the motor-side bolt fastening portions 71b are located inward of the inner peripheral surface of the remaining part of the fitting protrusion 71. A bolt fastening hole 71e is provided at the center of each motor-side bolt fastening portion 71b when viewed from the axial direction. For example, the bolt fastening hole 71e passes through the motor-side bolt fastening portion 71b in the axial direction and reaches the body 31c. Each motor-side bolt fastening portion 71b has a bolt fastening surface 71f around the bolt fastening hole 71e. The diameter of the bolt fastening surface 71f is greater than the diameter of the bolt fastening hole 71e. In the present embodiment, the bolt fastening surface 71f is an example of a fitting end face. The outer peripheral surface 71a of the fitting protrusion 71 is an example of a fitting side surface.

The fitting legs 71c are columnar bodies having a crescent-shaped crosssection perpendicular to the axial direction. In the radial direction of the fitting protrusion 71, the outermost positions of the fitting legs 71c coincide with the outer peripheral surface 71a of the fitting protrusion 71. In the radial direction of the fitting protrusion 71, the innermost positions of the fitting legs 71c are located outward of the innermost positions of the motor-side bolt fastening portions 71b. Each fitting leg 71c has a crescent-shaped normal end face 71g. The diameter of a circle that contacts the radially innermost portions of the normal end faces 71g of the two fitting legs 71c is greater than the diameter of a circle that contacts the radially innermost portions of the two bolt fastening surfaces 71f, when viewed from the axial direction. In the present embodiment, the normal end face 71g is an example of a fitting end face.

Each connecting portion 71d extends in an arc shape so as to connect a corresponding motor-side bolt fastening portion 71b and a corresponding fitting leg 71c that are adjacent to each other in the circumferential direction. In the radial direction of the fitting protrusion 71, the outermost positions of the connecting portions 71d coincide with the outer peripheral surface 71a of the fitting protrusion 71. In the radial direction of the fitting protrusion 71, the innermost positions of the connecting portions 71d coincide with the innermost positions of the fitting legs 71c. The connecting portions 71d have a constant radial thickness. The radial thickness of the fitting protrusion 71 is constant in the areas other than where the motor-side bolt fastening portions 71b are provided. Each connecting portion 71d has an arc-shaped end face 71h. The diameter of a circle that contacts the radially innermost portions of the four end faces 71h is equal to the diameter of a circle that contacts the radially innermost portions of the normal end faces 71g, when viewed from the axial direction.

The extending portion 72 extends in the axial direction from the outer peripheral edge of the second end 31b of the body 31c. An inner peripheral surface 72a of the extending portion 72 is an inclined surface inclined with respect to the axial direction. The extending portion 72 has a radial thickness that decreases toward its distal end 72b. The extending portion 72 is located radially outward of the fitting protrusion 71.

The groove 73 is provided between the fitting protrusion 71 and the extending portion 72 in the radial direction of the body 31c. An inner wall surface 73a of the groove 73 is formed by the outer peripheral surface 71a of the fitting protrusion 71 and the inner peripheral surface 72a of the extending portion 72. A bottom surface 73b of the groove 73 is a surface that connects the outer peripheral surface 71a of the fitting protrusion 71 and the inner peripheral surface 72a of the extending portion 72. The groove 73 has a depth in the axial direction. The depth of the groove 73 is equal to the length by which the extending portion 72 extends along the axial direction of the body 31c. The radial width of the groove 73 increases as the distance from the bottom surface 73b increases.

### <Regarding Configuration of Mechanism-Side Fitting Portion>

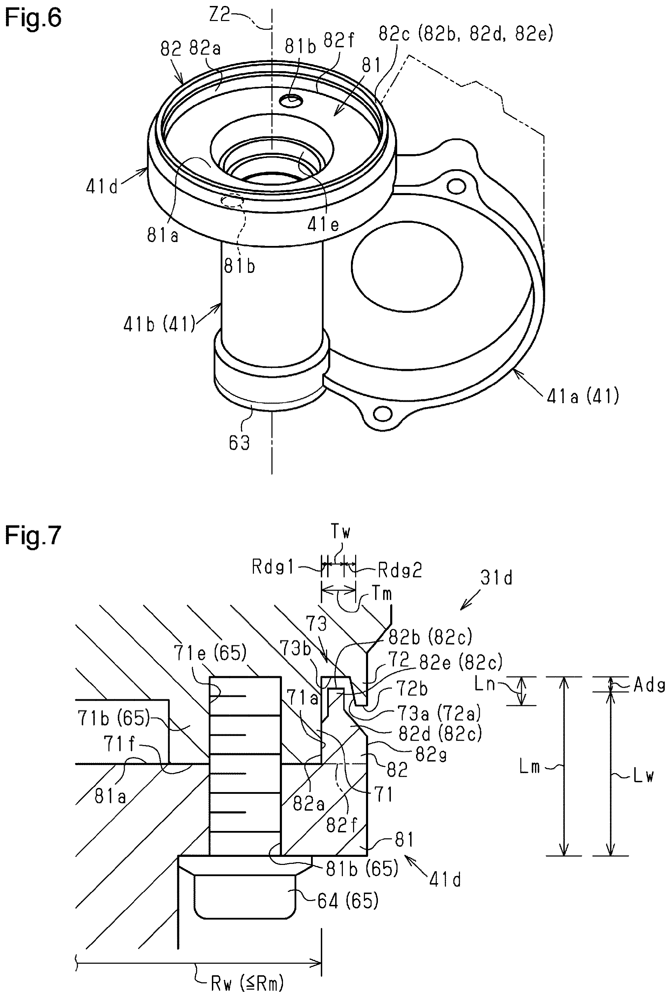

As shown in FIG. 6, the mechanism-side fitting portion 41d of the worm housing 41 is a portion of the second body 41b that is located on the side opposite from the body lid 63. The axial direction of the mechanism-side fitting portion 41d coincides with a direction along the axis Z2. The radial direction of the mechanism-side fitting portion 41d coincides with a direction perpendicular to the axis Z2. The mechanism-side fitting portion 41d has an opposing portion 81 and a peripheral protruding portion 82.

The opposing portion 81 has a ring shape when viewed from the axial direction. The opposing portion 81 extends radially outward from the peripheral edge of the shaft hole 41e of the mechanism-side fitting portion 41d. The opposing portion 81 extends radially outward from the outer peripheral edge of the end of the second body 41b. **In** relation to the motor 30, the opposing portion 81 extends beyond the radial outer side of the rotor 33 when viewed from the axial direction. In relation to the motor 30, the opposing portion 81 overlaps with the stator 32 when viewed from the axial direction. The opposing portion 81 includes an opposing surface 81a that is perpendicular to the axial direction. The opposing portion 81 is provided with two bolt fastening holes 81b. For example, the bolt fastening holes 81b extend through the opposing portion 81 in the axial direction. The two bolt fastening holes 81b are arranged at equal angular intervals of 180 degrees along the circumferential direction.

The peripheral protruding portion 82 extends in the axial direction from the outer peripheral edge of the opposing portion 81. The peripheral protruding portion 82 extends continuously along the circumferential direction of the opposing portion 81. In relation to the motor 30, the peripheral protruding portion 82 is disposed radially outward of the rotor 33 when viewed from the axial direction. In relation to the motor 30, the peripheral protruding portion 82 is disposed so as to include a portion that overlaps with the stator 32 when viewed from the axial direction. An inner peripheral surface 82a of the peripheral protruding portion 82 is a cylindrical surface that extends perpendicular to the radial direction and parallel to the axial direction.

As shown in FIGS. 6 to 9, the peripheral protruding portion 82 has a groove insertion portion 82c. The groove insertion portion 82c includes a distal end 82b, a gradually changing portion 82d, and a thin portion 82e. The distal end 82b of the groove insertion portion 82c is also a distal end of the peripheral protruding portion 82. The gradually changing portion 82d is a portion between a base 82f and the distal end 82b of the peripheral protruding portion 82, and has a radial thickness that gradually decreases toward the distal end 82b. The thin portion 82e is a portion between the gradually changing portion 82d and the distal end 82b of the peripheral protruding portion 82, and has a constant radial thickness toward the distal end 82b. The radial thickness of the thin portion 82e is the smallest within the peripheral protruding portion 82. The portion of the peripheral protruding portion 82 other than the groove insertion portion 82c has an outer peripheral surface 82g that is perpendicular to the radial direction. The outer peripheral surface 82g is a cylindrical surface extending parallel to the axial direction.

As shown in FIGS. 7 to 9, in relation to the motor-side fitting portion 31d, the axial length Lw from the base 82f to the distal end 82b of the peripheral protruding portion 82 is smaller than the axial length Lm from the bolt fastening surface 71f or the normal end face 71g to the bottom surface 73b of the groove 73. The outer peripheral surface 82g of the peripheral protruding portion 82 overlaps with the distal end 72b of the extending portion 72 when viewed from the axial direction. In relation to the motor-side fitting portion 31d, the diameter Rw of the inner peripheral surface 82a of the peripheral protruding portion 82 is less than or equal to the diameter Rm of the outer peripheral surface 71a of the fitting protrusion 71. In relation to the motor-side fitting portion 31d, the radial thickness Tw of the thin portion 82e of the groove insertion portion 82c is smaller than the smallest radial width Tm of the groove 73.

<Regarding Fitting Between Motor-Side Fitting Portion and Mechanism-Side Fitting Portion>

As shown in FIGS. 3 and 7 to 9, the motor-side fitting portion 31d and the mechanism-side fitting portion 41d are fitted together by fitting the fitting protrusion 71 into the peripheral protruding portion 82 in a socket-and-spigot manner. The outer peripheral surface 71a of the fitting protrusion 71 and the inner peripheral surface 82a of the peripheral protruding portion 82 contact each other in the radial direction. This provides radial positioning when the fitting protrusion 71 is fitted into the peripheral protruding portion 82 in a socket-and-spigot manner. The fitting protrusion 71 contacts the opposing portion 81 in the axial direction. This provides axial positioning when the fitting protrusion 71 is fitted into the peripheral protruding portion 82 in a socket-and-spigot manner. Such portions that are fitted together in a socket-and-spigot manner are disposed so as to include a portion radially outward of the rotor 33 and overlapping with the stator 32, when viewed from the axial direction. In the present embodiment, the outer peripheral surface 71a of the fitting protrusion 71 and the inner peripheral surface 82a of the peripheral protruding portion 82 are an example of contact surfaces that contact each other.

FIG. 7 schematically shows an end face structure of a portion including the motor-side bolt fastening portion 71b in the state obtained by the socket-and-spigot fitting. In this case, the outer peripheral surface 71a of the fitting protrusion 71 contacts the entire inner peripheral surface 82a of the peripheral protruding portion 82 in the radial direction. The bolt fastening surface 71f contacts the opposing surface 81a in the axial direction.

The circumferential positions of the motor-side fitting portion 31d and the mechanism-side fitting portion 41d are adjusted such that the bolt fastening holes 71e, 81b communicate with each other in the axial direction. The bolt 64 is inserted through the bolt fastening holes 71e, 81b that communicate with each other in the axial direction, from the mechanism-side fitting portion 41d toward the motor-side fitting portion 31d. The motor-side fitting portion 31d and the mechanism-side fitting portion 41d are thus fastened together. The set of the motor-side bolt fastening portion 71b including the bolt fastening hole 71e and the bolt fastening hole 81b forms one bolt fastening portion 65. The two bolt fastening portions 65 are located radially inward of the area where the fitting protrusion 71 is fitted into the peripheral protruding portion 82 in a socket-and-spigot manner.

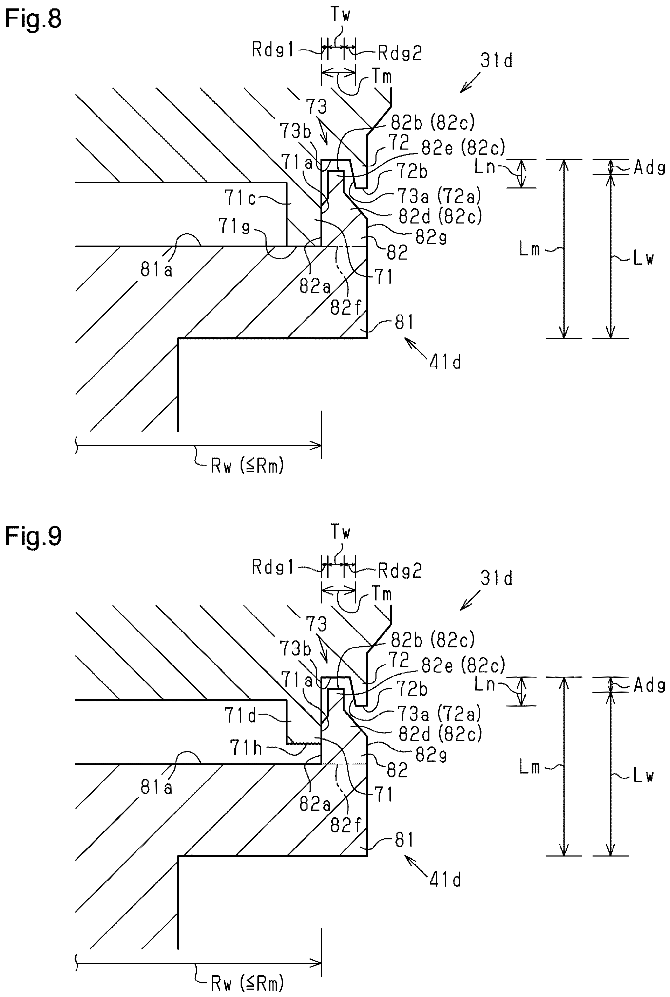

FIG. 8 schematically shows an end face structure of a portion including the fitting leg 71c in the state obtained by the socket-and-spigot fitting. In this case, the outer peripheral surface 71a of the fitting protrusion 71 contacts the entire inner peripheral surface 82a of the peripheral protruding portion 82 in the radial direction. The normal end face 71g contacts the opposing surface 81a in the axial direction. In the radial direction of the fitting protrusion 71, the range in which the normal end face 71g contacts the opposing surface 81a is smaller than the range in which the bolt fastening surface 71f contacts the opposing surface 81a. This is because, in the radial direction of the fitting protrusion 71, the innermost position of the fitting leg 71c is located outward of the innermost position of the motor-side bolt fastening portion 71b.

FIG. 9 schematically shows an end face structure of a portion including the connecting portion 71d fitted in a socket-and-spigot manner. At the location of the connecting portion 71d, the outer peripheral surface 71a of the fitting protrusion 71 contacts part of the inner peripheral surface 82a of the peripheral protruding portion 82 in the radial direction. In other words, the end face 71h of the connecting portion 71d faces the opposing surface 81a in the axial direction, but does not contact the opposing surface 81a in the axial direction. In the radial direction of the fitting protrusion 71, the range in which the outer peripheral surface 71a contacts the inner peripheral surface 82a is smaller than the range in which the outer peripheral surfaces 71a of the motor-side bolt fastening portion 71b and the fitting leg 71c contact the inner peripheral surface 82a. This is because the connecting portion 71d protrudes less than the motor-side bolt fastening portion 71b and the fitting leg 71c in the axial direction. In other words, a portion of the inner peripheral surface 82a that corresponds to the connecting portion 71d has a portion in the axial direction that is not fitted on the connecting portion 71d. For example, the amount by which the connecting portion 71d protrudes may be any amount as long as the amount is large enough to provide radial positioning when the fitting protrusion 71 is fitted into the peripheral protruding portion 82 in a socket-and-spigot manner.

As shown in FIGS. 7 to 9, of the groove insertion portion 82c of the peripheral protruding portion 82, part of the thin portion 82e, including the distal end 82b, is inserted into the groove 73. In this case, the distal end 82b inserted in the groove 73 faces the bottom surface 73b of the groove 73 with an axial clearance Adg therebetween. The clearance Adg is equal to the difference between the axial length Lw from the base 82f to the distal end 82b of the peripheral protruding portion 82 and the axial length Lm from the bolt fastening surface 71f or the normal end face 71g to the bottom surface 73b of the groove 73. The clearance Adg is smaller than the axial length Ln from the bottom surface 73b of the groove 73 to the distal end 72b of the extending portion 72. In other words, the extending portion 72 extends toward the lower side in the direction of gravity such that the axial position of the extending portion 72 overlaps with part of the thin portion 82e, i.e., overlaps with the peripheral protruding portion 82.

The thin portion 82e inserted in the groove 73 faces the inner wall surface 73a of the groove 73, i.e., faces the outer peripheral surface 71a of the fitting protrusion 71 and the inner peripheral surface 72a of the extending portion 72, with a radial clearance Rdg therebetween. The clearance Rdg is the sum of the radial clearance between the thin portion 82e and the outer peripheral surface 71a and the radial clearance between the thin portion 82e and the inner peripheral surface 72a. The clearance Rdg is greater than the difference (clearance Rdg1 + clearance Rdg2) between the radial thickness Tw of the thin portion 82e of the groove insertion portion 82c and the smallest radial width Tm of the groove 73.

### <Functions of Embodiment>

As shown in FIGS. 3 and 7 to 9, the extending portion 72 is located on the upper side in the direction of gravity with respect to the peripheral protruding portion 82 and radially outward of the outer peripheral surface 82g of the peripheral protruding portion 82. The peripheral protruding portion 82 is the radially outermost part of the mechanism-side fitting portion 41d. The extending portion 72 extends toward the lower side in the direction of gravity so as to overlap with part of the thin portion 82e, i.e., overlap with the peripheral protruding portion 82, in the axial direction. In other words, the extending portion 72 covers the peripheral protruding portion 82, i.e., the mechanism-side fitting portion 41d, from the upper side in the direction of gravity. The portion of the fitting protrusion 71 that is fitted into the peripheral protruding portion 82 in a socket-and-spigot manner is a portion radially inward of the extending portion 72. This allows the extending portion 72 to cover, from the outside, the area where the fitting protrusion 71 is fitted into the peripheral protruding portion 82 in a socket-and-spigot manner.

### <Effects of Embodiment>

(1-1) The extending portion 72 can cover, from the outside, the area where the fitting protrusion 71 is fitted into the peripheral protruding portion 82 in a socket-and-spigot manner. This can reduce entry of water into the interior of the transmission mechanism 40 through a clearance in the area where the fitting protrusion 71 is fitted into the peripheral protruding portion 82 in a socket-and-spigot manner. There is no need to add a configuration such as an O-ring to the area where the fitting protrusion 71 is fitted into the peripheral protruding portion 82 in a socket-and-spigot manner.

(1-2) As shown in FIG. 7, the two bolt fastening portions 65 are located radially inward of the area where the fitting protrusion 71 is fitted into the peripheral protruding portion 82 in a socket-and-spigot manner. As a result, the radial dimensions of the motor 30 and the transmission mechanism 40 can be reduced.

(1-3) As shown in FIGS. 7 to 9, the distal end 82b inserted in the groove 73 faces the bottom surface 73b of the groove 73 with the axial clearance Adg therebetween. The clearance Adg can absorb the axial assembly tolerance regarding the assembly of the motor 30 and the transmission mechanism 40. This is effective in improving ease of assembly.

(1-4) As shown in FIGS. 7 to 9, the thin portion 82e inserted in the groove 73 faces the inner wall surface 73a of the groove 73, i.e., faces the outer peripheral surface 71a of the fitting protrusion 71 and the inner peripheral surface 72a of the extending portion 72, with the radial clearance Rdg therebetween. The clearance Rdg can absorb the axial assembly tolerance regarding the assembly of the motor 30 and the transmission mechanism 40. This is effective in improving ease of assembly.

(1-5) Even if water flows around the extending portion 72 from the outside, the clearances Adg, Rdg can reduce the occurrence of capillary action etc. This can more preferably reduce entry of water into the interior of the transmission mechanism 40.

(1-6) As shown in FIG. 3, the motor-side fitting portion 31d and the mechanism-side fitting portion 41d are fitted together at a position radially outside the rotor 33 and overlapping with the stator 32 when viewed from the axial direction. This ensures rigidity in the axial direction of the motor 30 in the area where the fitting protrusion 71 is fitted into the peripheral protruding portion 82 in a socket-and-spigot manner.

On the other hand, as shown in FIG. 9, the axial fitting range between the motor-side fitting portion 31d and the mechanism-side fitting portion 41d is smaller in the areas where the bolt fastening surfaces 71f and the normal end faces 71g are not present, i.e., in the areas where the connecting portions 71d are present, than in the remaining area. This allows the rigidity related to the fitting between the motor-side fitting portion 31d and the mechanism-side fitting portion 41d to be reduced in the areas where the connecting portions 71d are present. Therefore, vibration caused by radial expansion and contraction of the motor housing 31 is less likely to be transmitted to the mechanism-side fitting portion 41d, i.e., the transmission mechanism 40. This can reduce a decrease in durability of the motor housing 31, i.e., the motor 30.

(1-7) As shown in FIGS. 7 and 8, the bolt fastening surface 71f and the normal end face 71g each contact the opposing surface 81a in the axial direction. The bolt fastening surface 71f also serves as the bolt fastening portion 65. This is effective in reducing the radial dimensions of the motor 30 and the transmission mechanism 40.

(1-8) As shown in FIGS. 7 and 8, in the radial direction of the fitting protrusion 71, the innermost position of the fitting leg 71c is located outward of the innermost position of the motor-side bolt fastening portion 71b. Therefore, in the radial direction of the fitting protrusion 71, the range in which the normal end face 71g contacts the opposing surface 81a is smaller than the range in which the bolt fastening surface 71f contacts the opposing surface 81a. This allows the rigidity related to the fitting between the motor-side fitting portion 31d and the mechanism-side fitting portion 41d to be reduced compared to a case where the range in which the normal end face 71g contacts the opposing surface 81a is the same as the range in which the bolt fastening surface 71f contacts the opposing surface 81a. As a result, vibration caused by radial expansion and contraction of the motor housing 31 is less likely to be transmitted to the mechanism-side fitting portion 41d, i.e., the transmission mechanism 40.

(1-9) As shown in FIG. 5, the motor-side bolt fastening portions 71b and the fitting legs 71c are alternately arranged at equal intervals in the circumferential direction. Therefore, unevenness in rigidity related to the fitting between the motor-side fitting portion 31d and the mechanism-side fitting portion 41d can be reduced in the area where the fitting protrusion 71 is fitted into the peripheral protruding portion 82 in a socket-and-spigot manner.

(1-10) As shown in FIG. 5, the two motor-side bolt fastening portions 71b and the two fitting legs 71c are arranged at equal angular intervals of 90 degrees along the circumferential direction. Therefore, unevenness in rigidity related to the fitting between the motor-side fitting portion 31d and the mechanism-side fitting portion 41d can be more preferably reduced in the area where the fitting protrusion 71 is fitted into the peripheral protruding portion 82 in a socket-and-spigot manner.

### <Other Embodiments>

The above embodiment may be modified as follows. The following other embodiments can be combined as long as no technical contradiction arises.
- The clearance Adg may be, for example, either greater or smaller than in the embodiment and may be modified as appropriate. In this case, the clearance Adg is preferably greater than or equal to the length Ln.
   - The clearance Rdg may be, for example, either greater or smaller than in the embodiment and may be modified as appropriate.
- The clearance Adg may be omitted. The same applies to the clearance Rdg. For example, when the clearance Adg and the clearance Rdg are not present, the thin portion 82e inserted in the groove 73 contacts the inner wall surface 73a and the bottom surface 73b. In this case, a labyrinth structure may be formed between the contact surfaces between the thin portion 82e and the inner wall surface 73a and bottom surface 73b by adjusting the surface roughness of these contact surfaces.
- The plurality of bolt fastening portions 65 may be disposed radially outward of the area where the fitting protrusion 71 is fitted into the peripheral protruding portion 82 in a socket-and-spigot manner.
   - The outer peripheral surface 82g of the peripheral protruding portion 82 may be aligned with the outer peripheral surface of the extending portion 72 when viewed from the axial direction. When the area where the fitting protrusion 71 is fitted into the peripheral protruding portion 82 in a socket-and-spigot manner can be covered from the outside, the outer peripheral surface 82g of the peripheral protruding portion 82 may be located radially outside the outer peripheral surface of the extending portion 72.
- The amount by which the connecting portion 71d protrudes in the axial direction may be the same as the amount by which the motor-side bolt fastening portion 71b and the fitting leg 71c protrude in the axial direction. In this case, the amount by which the fitting protrusion 71 protrudes in the axial direction is constant along its entire circumference.
- The socket-and-spigot fitting between the motor-side fitting portion 31d and the mechanism-side fitting portion 41d may be implemented in such a manner that the peripheral protruding portion 82 is fitted into the extending portion 72 in a socket-and-spigot manner. In this case, the outer peripheral surface 82g of the peripheral protruding portion 82 and the inner peripheral surface 72a of the extending portion 72 contact each other in the radial direction. In another embodiment described herein, the outer peripheral surface 82g of the peripheral protruding portion 82 and the inner peripheral surface 72a of the extending portion 72 are the contact surfaces that contact each other.
- The motor-side bolt fastening portions 71b and the fitting legs 71c may be arranged at different angular positions along the circumferential direction. In other words, the two motor-side bolt fastening portions 71b may be offset from each other by an angle other than 180 degrees along the circumferential direction. Additionally, the phases of the two fitting legs 71c may be offset from each other by an angle other than 180 degrees along the circumferential direction.
- The two motor-side bolt fastening portions 71b may be disposed adjacent to each other in the circumferential direction. The two fitting legs 71c may be disposed adjacent to each other in the circumferential direction.
   - In the radial direction of the fitting protrusion 71, the innermost positions of the fitting legs 71c may be located inward of, or may coincide with, the innermost positions of the motor-side bolt fastening portions 71b. For example, when the innermost positions of the fitting legs 71c coincide with the innermost positions of the motor-side bolt fastening portions 71b in the radial direction of the fitting protrusion 71, the bolt fastening surfaces 71f and the normal end faces 71g may have the same shape. In this case, both the bolt fastening surfaces 71f and the normal end faces 71g may have a circular shape or may have a crescent shaped.
- In the radial direction of the fitting protrusion 71, the outermost positions of the fitting legs 71c may be different from the position of the outer peripheral surface 71a of the fitting protrusion 71.
   - At least one fitting leg 71c may be omitted. In this case, at least one fitting leg 71c may be replaced with a motor-side bolt fastening portion 71b.
- The total number of the motor-side bolt fastening portions 71b and the fitting legs 71c may be any value that is at least three. For example, the number of the motor-side bolt fastening portions 71b may be two, and the number of the fitting legs 71c may be one.
- At least one motor-side bolt fastening portion 71b may be omitted. In this case, at least one motor-side bolt fastening portion 71b may be replaced with a fitting leg 71c. When all of the motor-side bolt fastening portions 71b are replaced with fitting legs 71c, the bolt fastening portions 65 may simply be provided at different locations.
- The transmission mechanism 40 is not limited to a worm reduction mechanism and may be modified as appropriate to, for example, a belt reduction mechanism using a ball screw mechanism.
   - The operating member 11 is not limited to a steering wheel and may be, for example, a joystick.
- In the above embodiment, the motor 30 may be configured to transmit the motor torque to the steered shaft 14.

- The above embodiment may be, for example, a steer-by-wire vehicle steering system in which the power transmission path between the operating member 11 and the steered wheels 12 is mechanically separated. In this case, the motor torque of the motor 30 may be used as either or both of a reaction force that is applied to the operating member 11 and a steered force for turning the steered wheels 12. Alternatively, the above embodiment may be a rear-wheel vehicle steering system that turns right and left rear wheels of a vehicle. In this case, the motor torque of the motor 30 may be used as a steered force for turning the right and left rear wheels.

## Claims

1. A vehicle steering system including an operating mechanism to which an operating member of a vehicle is connected, the operating member being configured to be operated to turn a steered wheel of the vehicle, the vehicle steering system comprising:
a motor configured to generate torque for changing an operating force that is needed to operate the operating member; and
a transmission mechanism configured to transmit the torque generated by the motor to the operating mechanism, wherein:
the motor includes a motor housing that houses a stator and a rotor, and an output shaft configured to rotate with the rotor includes an output portion that protrudes from the motor housing to outside;
the transmission mechanism includes a mechanism housing that houses part of the operating mechanism and that houses the output portion so as to connect the part of the operating mechanism to the output shaft;
the motor is disposed such that an axis of the output shaft intersects with a horizontal direction and that the output portion protrudes from a lower side of the motor housing in a direction of gravity;
the transmission mechanism is disposed so as to house the output portion from a lower side of the motor in the direction of gravity;
the motor housing includes a motor-side fitting portion that is fitted in the mechanism housing in an axial direction of the output shaft;
the mechanism housing includes a mechanism-side fitting portion that is fitted on the motor-side fitting portion in the axial direction; and
the motor-side fitting portion includes an extending portion disposed outward of the mechanism-side fitting portion in a radial direction of the output shaft when viewed from the axial direction, and the extending portion extends from the motor housing toward a lower side in the direction of gravity such that a position of the extending portion in the axial direction overlaps with the mechanism-side fitting portion.

2. The vehicle steering system according to claim 1, wherein:
the motor housing includes a plurality of bolt fastening portions, the mechanism housing includes a plurality of bolt fastening portions, and the bolt fastening portion of the motor housing is fastened to an opposing one of the bolt fastening portions of the mechanism housing in the axial direction;
the motor-side fitting portion includes a fitting protrusion extending from the motor housing toward the lower side in the direction of gravity at a position inward of the extending portion in the radial direction of the output shaft;
the mechanism-side fitting portion includes a peripheral protruding portion extending from the mechanism housing toward an upper side in the direction of gravity at a position inward of the extending portion in the radial direction of the output shaft;
an outer peripheral surface of the fitting protrusion and an inner peripheral surface of the peripheral protruding portion include contact surfaces that contact each other; and
the plurality of bolt fastening portions is disposed inward of the contact surfaces in the radial direction of the output shaft.

3. The vehicle steering system according to claim 2, wherein:
the motor-side fitting portion includes a groove having a depth in the axial direction, and the groove includes an inner wall surface provided by the outer peripheral surface of the fitting protrusion and an inner peripheral surface of the extending portion; and
a distal end of the peripheral protruding portion inserted in the groove faces a bottom surface of the groove with a clearance between the distal end and the bottom surface in the axial direction.

4. The vehicle steering system according to claim 2 or 3, wherein:
the motor-side fitting portion includes a groove having a depth in the axial direction, and the groove includes an inner wall surface provided by the outer peripheral surface of the fitting protrusion and an inner peripheral surface of the extending portion; and
a distal end of the peripheral protruding portion inserted in the groove faces the inner wall surface with a clearance between the distal end and the inner wall surface in the radial direction of the output shaft.
